# EUROPÄISCHE PATENTSCHRIFT

(11) **EP 2 754 943 B1**
(45) Veröffentlichungstag und Bekanntmachung des Hinweises auf die Patenterteilung: **01.08.2018**
(21) Anmeldenummer: 14000088.6
(22) Anmeldetag: 10.01.2014
(51) Int. Cl.: F16L 57/00, B65D 59/00, F16L 55/115

(54) **Ventil mit Schutzkappe**
Valve with protection cap
Vanne avec capuchon de protection

(30) Priorität: 10.01.2013 DE 202013000216 U
(43) Veröffentlichungstag der Anmeldung: 16.07.2014
(73) Patentinhaber: Gebr. Kemper GmbH + Co. KG Metallwerke, 57462 Olpe (DE)
(72) Erfinder: Hilchenbach, Gerd, 57462 Olpe (DE)
(74) Vertreter: Grünecker Patent- und Rechtsanwälte PartG mbB

(56) Entgegenhaltungen:
- EP-A2- 0 933 572
- US-A- 3 490 488
- US-A- 4 487 228
- US-B1- 7 298 279

## Beschreibung

Die vorliegende Erfindung betrifft ein Ventil für Rohrleitungen in einem Trinkwassersystem mit einem Gehäuse, in dem ein Ventilkörper beweglich vorgesehen ist, der in einer Geschlossenstellung gegen einen Ventilsitz anlegbar ist, um einen Stutzen des Ventils gegenüber einem durch das Gehäuse gebildeten Einlass abzusperren, und der in einer Offenstellung eine Kommunikation zwischen der Einlassöffnung und dem Stutzen erlaubt, wobei der Stutzen an seinem freien Ende mit einem Gewinde versehen ist, auf welches eine die Stutzenöffnung des Stutzens abdeckende Schutzkappe montierbar, insbesondere aufschraubbar oder aufsteckbar ist. Ein solches Ventil ist beispielsweise aus der EP 0 933 572 A2 bekannt.

Gattungsgemäße Ventile werden bei Wartungsarbeiten zum einen zum Entleeren von druckseitig abgesperrten Leitungsnetzen und/oder zum anderen zum Befüllen derselben nach Abschluss der Wartungsarbeiten benutzt und umfassen in der Regel ein metallisches Gehäuse und einen metallischen Absperrkegel, an dessen einem Ende der Ventilkörper vorgesehen ist und an dessen anderem Ende ein Handrad vorgesehen ist, über welches der Ventilkörper von der Geschlossenstellung in die Offenstellung verbringbar ist. Üblicherweise rechtwinklig von einem die Einlassöffnung vorgebenden Einlasskanal, der von dem metallischen Gehäuse umgeben wird, gehen Auslass- bzw. Einlasskanäle ab. Diese Auslass- bzw. Einlasskanäle sind durch an dem Außenumfang des Gehäuses vorgesehene Bohrungen gebildet. Diese Bohrungen münden in einem Ringkanal, der zwischen der Außenumfangsfläche des Gehäuses und einem zylindrischen Mantel geformt ist, der mit seinen axialen vorderen und hinteren Endflächen im Wesentlichen dichtend an dem Außenumfang des Gehäuses anliegt und zusammen mit dem Stutzen als Teile eines einheitlichen Körpers ausgeformt sind. An dem gegenüberliegenden Ende bildet der Stutzen die Stutzenöffnung aus.

In der EP 0 933 572 A2 ist der Stutzen mit einem Innengewinde versehen, in welches ein Stopfen als Schutzkappe fluiddicht eingeschraubt ist. Als Verbindungsstück zwischen zwei Rohrleitungen bietet das Ventil der EP 0 933 572 A2 bei eingeschraubtem Stopfen keine Möglichkeit über den Stutzen zu überprüfen, ob das Ventil nach einem Wartungsvorgang oder dergleichen tatsächlich wieder geschlossen wurde.

Im Stand der Technik sind aber auch Ventile bekannt, deren Stutzen mit einem Außengewinde versehen ist, auf das die Schutzkappe aufgeschraubt ist, welche das Gewinde schützen und das Eindringen von Fremdkörpern verhindern soll. An das Gewinde wird bestimmungsgemäß eine handelsübliche Schlauchverschraubung mit Schlauch angebracht, wenn über das Ventil eine Entleerung oder Befüllung des druckseitig abgesperrten Leitungsnetzes erfolgen soll.

Im Anschluss an die Wartungsarbeiten, insbesondere dann, wenn die Befüllung nicht über das vorliegende Ventil erfolgt, kann es vorkommen, dass die Schutzkappe auf das Außengewinde aufgeschraubt
wird, das Ventil aber nicht verschlossen wird. Nach der Befüllung hält die Schutzkappe dem Druck eine gewisse Zeit stand. Die die Wartung vornehmende Person erkennt die Fehlbedienung nicht, da das Ventil zunächst nicht leckt. Nach relativ kurzer Betriebsdauer besteht aber die Gefahr der Zerstörung, sodass im Bereich des Ventils eine große Leckage auftreten kann.

Der zylindrische Mantel mit dem Stutzen wird üblicherweise als einheitlicher Körper und aus Kunststoff ausgeführt. Der zylindrische Mantel wird regelmäßig lediglich auf das Gehäuse aufgeschoben und dort verrastet. Die zylindrischen Endabschnitte des zylindrischen Mantels liegen zwar dichtend an dem Gehäuse an, können indes keine hohen Drücke dauerhaft halten. Diese führen zwangsläufig bei dauerhaft hohen Drücken zu Leckagen.

Der vorliegenden Erfindung liegt das Problem zugrunde, ein Ventil zu schaffen, welches die obigen Nachteile ganz oder teilweise behebt. Dabei will die vorliegende Erfindung insbesondere ein Ventil schaffen, das bei einer Fehlbedienung diese unmittelbar aufgrund einer leicht festzustellenden Leckage erkennbar macht.

Zur Lösung des obigen Problems wird mit der vorliegenden Erfindung ein Ventil mit den Merkmalen von Anspruch 1 angegeben. Bei dem erfindungsgemäßen Ventil sind die Schutzkappe und der Stutzen so ausgebildet, dass die Stutzenöffnung nicht mit der Schutzkappe fluiddicht verschließbar ist. Die Schutzkappe ist dabei so ausgestaltet, dass sie das Gewinde schützt, welches vorzugsweise als Außengewinde ausgebildet ist. Bei aufgeschraubter Schutzkappe ergibt sich indes weiterhin zwischen der Stutzenöffnung und der Schutzkappe ein Strömungsdurchgang, der ausreichend ist, eventuell in den Körper eindringende Flüssigkeit jedenfalls bei hinreichendem Druck der Flüssigkeit in dem Körper über die Stutzenöffnung abzuleiten und zu verhindern, dass innerhalb des Körpers ein kritischer Überdruck entsteht, der zu einer dauerhaften Beschädigung des Körpers oder zum Abreißen der Schutzkappe führen kann.

Dabei können beispielsweise an dem Gewinde verschiedene Schlitze vorgesehen sein, die ein Hindurchtreten von Flüssigkeit durch das Gewinde bei aufgeschraubter Schutzkappe auch bei nur geringem Überdruck in dem Stutzen erlauben.

Mit Blick auf die bekannte fluiddichte Verschraubung mittels Schlauchverschraubung ist es indes zu bevorzugen, den Stutzen und das daran vorgesehene Gewinde gegenüber dem Vorbekannten unverändert zu belassen und statt dessen eine Drainageöffnung vorzusehen, die bei fest auf dem Stutzen aufgeschraubter Schutzkappe verbleibt und mit der Stutzenkappe kommuniziert. Diese Drainageöffnung ist üblicherweise allein durch die Schutzkappe ausgebildet. Die Drainageöffnung kann stirnseitig an der Schutzkappe vorgesehen sein und einen Durchtritt von Fluid durch die Stutzenöffnung und die Drainageöffnung in Verlängerung des Stutzens erlauben.

Es werden aber im Hinblick auf die Herstellung der Schutzkappe aus Kunststoff Ausgestaltungen bevorzugt, die zu einer Drainageöffnung in dem vorerwähnten Sinne führen, die sich auf einfache Weise mittels Kunststoff-Spritzgießen verwirklichen lassen.

So wird bevorzugt vorgeschlagen, einen Kragen der Schutzkappe, der üblicherweise das Innengewinde zur Verschraubung der Schutzkappe an dem Gewinde des Stutzens hat, mit zumindest einem, vorzugsweise mehreren Schlitzen zu versehen. Der in diesem Sinne geschlitzte Kragen hat üblicherweise Schlitze, die sich streng axial erstrecken und im Wesentlichen auf dem Umfang des Kragens gleichmäßig verteilt vorgesehen sind. Die Schlitze erstrecken sich üblicherweise ausgehend von einer Kappenscheibe mit einem geränderten Rand bis zu dem freien, mit dem Innengewinde versehenen Rand der Schutzkappe.

Mit Blick darauf, dass die Stutzenöffnung üblicherweise von einer durchgehenden ebenen Ringfläche am freien Ende des Stutzens begrenzt wird, wird gemäß einer bevorzugten Ausgestaltung der vorliegenden Erfindung vorgeschlagen, die Schutzkappe mit einer profilierten Ringfläche zu versehen, die gegen die stirnseitige Endfläche des Stutzens anlegbar ist. Eine in solcher Weise profilierte Ringfläche kann beispielsweise mehrere in Umfangsrichtung verteilte Stege aufweisen, die an der stirnseitigen Endfläche des Stutzens anliegen und zwischen sich Luft für den Durchtritt von Fluid lassen und dementsprechend eine Drainageöffnung in dem vorerwähnten Sinne ausbilden. Diese Drainageöffnung führt üblicherweise zu den zuvor bereits beschriebenen Schlitzen am Kragen der Schutzkappe. In gleicher Weise wirken radiale Drainagenuten, die nach hinten gegenüber der stirnseitigen und an der ebenen Ringfläche anliegenden Endfläche des Stutzens abragen und dementsprechend radiale Drainageöffnungen ausbilden. Die Drainagenuten fluchten üblicherweise unmittelbar mit den an dem Kragen ausgebildeten Schlitzen.

Weitere Einzelheiten und Vorteile der vorliegenden Erfindung ergeben sich aus der nachfolgenden Beschreibung von als Entleerungsventil ausgebildeten Ausführungsbeispielen in Verbindung mit der Zeichnung. In dieser zeigen:
- Fig. 1: eine Längsschnittansicht eines Entleerungsventils;
- Fig. 2: eine perspektivische Seitenansicht auf ein erstes Ausführungsbeispiel einer Schutzkappe;
- Fig. 3: eine Draufsicht auf das in Figur 1 gezeigte Ausführungsbeispiel;
- Fig. 4: eine Seitenansicht auf das in den Figuren 2 und 3 gezeigte Ausführungsbeispiel;
- Fig. 5: eine Schnittansicht entlang der Linie V-V gemäß der Darstellung in Figur 4;
- Fig. 6: das vergrößerte Detail VI gemäß der Darstellung in Figur 1;
- Fig. 7: eine perspektivische Seitenansicht auf ein zweites Ausführungsbeispiels einer Schutzkappe; und
- Fig. 8: eine Draufsicht auf das in Figur 7 gezeigte Ausführungsbeispiel.

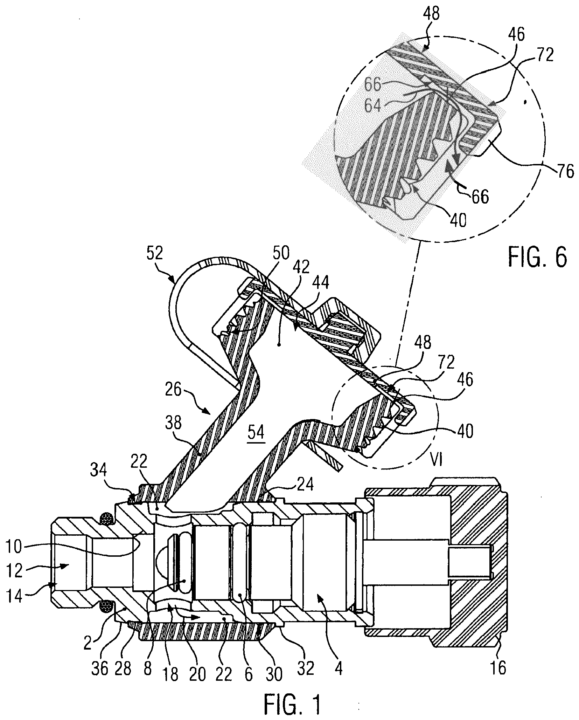

In Figur 1 kennzeichnet Bezugszeichen 2 ein gegossenes Metallgehäuse, in dem ein Absperrkegel 4 in Gewindeeingriff gehalten und über einen O-Ring abgedichtet eingesetzt ist. An seinem inneren freien Ende trägt der Absperrkegel 4 einen weiteren O-Ring 8, welcher an einen Ventilsitz 10 des Gehäuses 2 dichtend anlegbar ist, um einen an dem inneren Ende des Gehäuses 2 ausgesparten Einlasskanal 12, der von einer Einlassöffnung 14 begrenzt ist, abzudichten.

An dem gegenüberliegenden Ende des Absperrkegels 4 hat dieser ein Handrad 16, um den weiteren O-Ring 8 dichtend an den Ventilsitz 10 anzulegen und das Ausführungsbeispiel des Entleerungsventils von seiner in Figur 1 gezeigten Offenstellung in eine Geschlossenstellung zu verbringen.

In etwa auf axialer Höhe des weiteren O-Rings 8 in der Offenstellung hat das Gehäuse 2 mehrere auf dem Umfang verteilt vorgesehene Auslassbohrungen 18. Diese Auslassbohrungen 18 bilden Auslasskanäle 20, die in einen Ringraum 22 führen, der zwischen der Außenumfangsfläche des Gehäuses 2 und einem zylindrischen Mantel 24 eines mit Bezugszeichen 26 gekennzeichneten Auslaufkörpers gebildet ist. Dieser Auslaufkörper 26 ist aus Kunststoff hergestellt. Der zylindrische Mantel 24 hat einen Innenumfang der dem Außenumfang von vorderen und hinteren Anlageflächen 28, 30 des Gehäuses 2 entspricht, wobei die hintere Anlagefläche 30 durch einen ringförmigen Anschlagkragen 32 begrenzt ist, gegen welchen der zylindrische Mantel 24 anliegt. In dieser Position verrastet ein vorderer Bereich des zylindrischen Mantels 24 in einer Rastnut 34, die in axialer Richtung hinter einer Aufschieberampe 36 für den Mantel 24, die durch das Gehäuse 2 gebildet wird, an dem Gehäuse ausgespart ist. Der Auslaufkörper 26 hat einen von dem Ringraum 22 abgehenden Auslaufstutzen 38, dessen freies Ende radial verbreitert ist und dort ein Außengewinde 40 ausformt. Das axiale Ende dieses verbreiterten Bereichs 42 bildet eine Stutzenöffnung 44 aus, die durch eine stirnseitige Endfläche 46 des Auslaufstutzens 38 definiert wird, gegen welche eine Schutzkappe 48 anliegt. Die Schutzkappe 48 hat ein Innengewinde 50, welches in Gewindeeingriff mit dem Außengewinde 40 ist. Des Weiteren ist die Schutzkappe 48 verbunden mit einer Sicherungslasche 52, über welche die Schutzkappe 48 unverlierbar an dem Auslaufkörper 26 gehalten ist.

In der Offenstellung fließt Fluid durch die Einlassöffnung 14 und die Auslasskanäle 20 in einen Stutzenkanal 54. Im Regelfall ist dabei die Schutzkappe 48 abgeschraubt und eine gängige handelsübliche Schlauchverschraubung mit Schlauch an dem Außengewinde 40 befestigt. Über diesen Schlauch wird aus dem druckseitig abgesperrten Leitungsnetz vor Wartungs- bzw. Montagearbeiten an dem Leitungsnetz Wasser aus dem Leitungsnetz abgelassen. Es handelt sich üblicherweise um ein Trink- bzw. Brauchwasserleitungsnetz üblicherweise in einem Gebäude oder aber ein Heizungsleitungsnetz für warmes Heizungswasser.

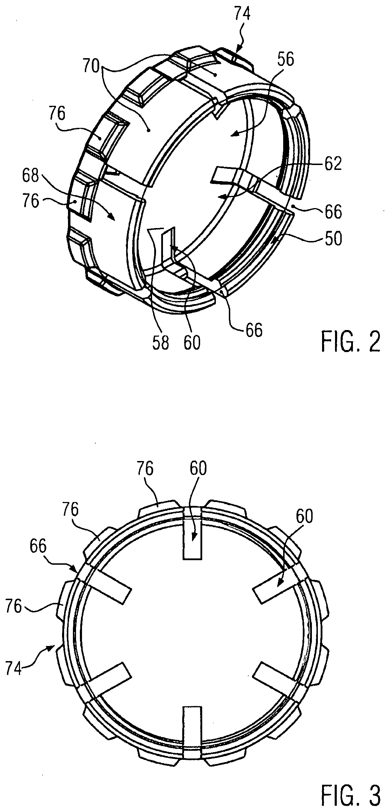

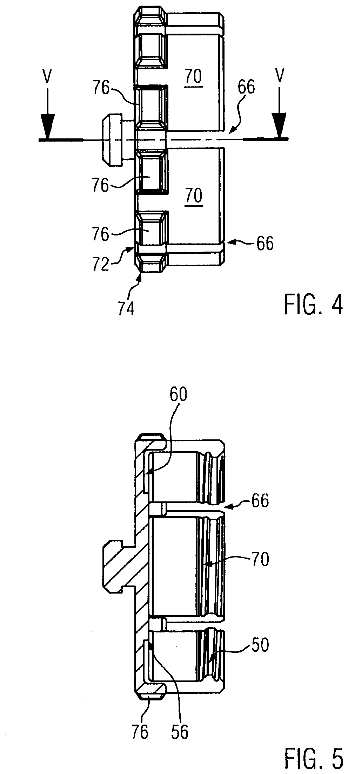

Details der Schutzkappe 48 sind in den Figuren 2 bis 5 zu erkennen. Die Schutzkappe 48 hat eine kreisförmige Kappenscheibe 56, von deren als innere Anlagefläche ausgeformte Innenfläche 58 mehrere Drainagenuten 60 nach hinten zurückspringen, so dass sich eine profilierte Ringfläche 62 ergibt, die teilweise gegen die stirnseitige Endfläche 46 des Auslaufstutzens 38 anlegbar ist und teilweise zwischen dieser Endfläche 46 und der Schutzkappe 48 eine Drainageöffnung 64 (vgl. Figur 6) freilässt. Die Drainagenuten 60 kommunizieren mit in axialer Verlängerung dieser Drainagenuten 60 angeordneten Schlitzen 66, die im bodennahen Bereich eines Kragens 68 der Schutzkappe 48 zunächst als Nuten und oberhalb des bodennahen Bereichs durchgehend an dem Kragen 68 ausgespart sind. Die Schlitze 66 durchsetzen dort den Kragen 68 vollständig in radialer Richtung, so dass der Kragen 68 in umfänglich durch die jeweiligen Schlitze 66 beabstandete Segmente 70 unterteilt ist. Diese Segmente 70 sind lediglich über die Kappenscheibe 56 miteinander verbunden, wodurch sich eine Art gelenkige Verbindung der jeweiligen Segmente 70 ergibt. Wie insbesondere Figur 5 verdeutlicht, hat der Kragen 68 an seinem stirnseitigen Ende das Innengewinde 50.

Sollte es bei aufgeschraubter Schutzkappe 48 dazu kommen, dass der Auslaufkörper 26 unbeabsichtigt mit dem Druck des Fluids in dem Leitungssystem beaufschlagt wird, kann das Druckmedium durch die Drainageöffnungen 64 entweichen. Zusätzlich besteht die Möglichkeit, dass die Segmente 70 radial nach außen flexen, und zwar um ein Gelenk 72, welches im radial äußeren Bereich der Kappenscheibe 56 durch die Verringerung der Wandstärke aufgrund der Drainagenuten 60 gebildet wird und über welches die Segmente 70 mit der Kappenscheibe 56 verbunden sind (vgl. Figur 6).

Die Wirksamkeit dieses Gelenkes 72 wird nicht durch gerändelten Rand 74 der Schutzkappe 48 beeinträchtigt, da Vorsprünge 76 des gerändelten Randes 74 die jeweiligen Schlitze 66 und die Drainagenuten 60 zwischen sich aufnehmen. Jedenfalls bietet diese gelenkige Ausgestaltung die Möglichkeit, die Schutzkappe 48 nicht nur aufzuschrauben, sondern auch aufzustecken, wodurch der Montageaufwand verringert ist.

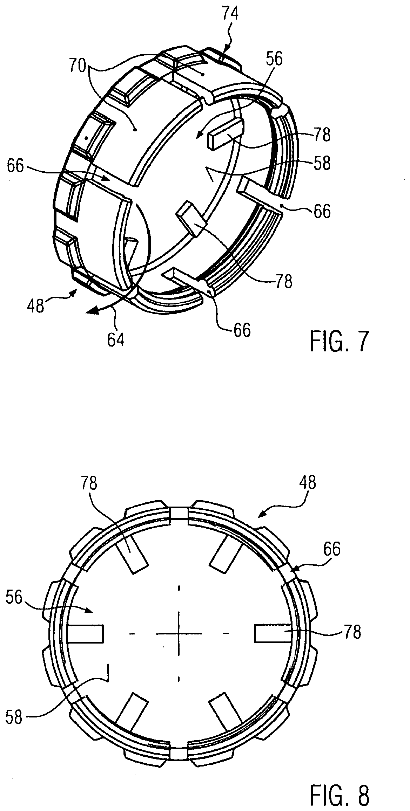

Die Figuren 7 und 8 zeigen ein weiteres Ausführungsbeispiel der Schutzkappe 48. Bei diesem Ausführungsbeispiel fehlen die zuvor beschriebenen Drainagenuten 60. Stattdessen wird eine Innenfläche 58 der Kappenscheibe 56 von sich in radialer Richtung erstreckenden Stegen 78 überragt. Diese Stege 78 haben - wie die Drainagenuten 60 - eine radiale Erstreckung, die in etwa der radialen Erstreckung der stirnseitigen Endfläche 46 entspricht, gegebenenfalls diese in radialer Richtung nach innen überragen. Durch das Ausführungsbeispiel nach den Figuren 7 und 8 ist zwischen den Stegen 78 jeweils eine Drainageöffnung 64 an der Stirnseite der stirnseitigen Endfläche 46 gebildet, die mit einem zugeordneten Schlitz 66 kommuniziert. Bei dieser Ausgestaltung haben die Segmente 70 nur noch in verringertem Maße die Möglichkeit, radial nach außen zu flexen und sich so bei einem Überdruck von dem verbreiterten Bereich 42 abzulösen, um Fluid hindurch und aus dem Auslaufkörper 26 herauszulassen. Es versteht sich von selbst, dass zwischen zwei in Umfangsrichtung benachbart vorgesehenen Stegen 78 mehrere Schlitze 66 vorgesehen sein können.

Die zuvor beschriebenen Maßnahmen auf Seiten der Schutzkappe 48 schaffen jeweils die Möglichkeit, unbeabsichtigt und bei aufgeschraubter Schutzkappe 48 in den Auslaufstutzen 38 eintretendes Fluid unmittelbar abzulassen, um direkt anzuzeigen, dass das Ventil nicht korrekt geschlossen ist.

Mit der vorliegenden Erfindung wird eine Schutzkappe 48 angegeben, die aufgeschraubt oder aufgesteckt auf den Stutzen 38 die Stutzenöffnung 44 so abdeckt, dass Verunreinigungen, insbesondere Staub oder auch kleine Insekten nicht in den Stutzen 38 gelangen können, gleichwohl aber die Möglichkeit gegeben ist, dass im Falle eines versehentlich nicht geschlossenen Ventils Fluid aufgrund der Gestaltung der Kappe 48 entweichen kann. Dies kann durch eine gewisse Elastizität der Schutzkappe 48 erfolgen, so dass diese bei einem Überdruck von dem Stutzen 38 abgesprengt wird und dementsprechend die "Sollbruchstelle" bildet, so dass der Anschluss des Stutzens 38 an das Gehäuse 2 des Ventils und die Dichtigkeit dort nicht beeinträchtigt wird. Alternativ oder ergänzend kann bei fest auf dem Stutzen 38 aufgeschraubter Schutzkappe 48 eine Drainageöffnung 64 verbleiben, die mit der Stutzenöffnung kommuniziert.

Die vorliegende Erfindung wurde vorstehend anhand von Beispielen eines Entleerungsventils beschrieben. Sie läst sich aber auch an einem Befüllungsventil oder jedem anderen Ventil verwirklichen, das einen im Regelfall drucklos gehaltenen Stutzen umfasst, auf dem eine Schutzkappe montierbar ist.

### Bezugszeichenliste

- 2: Gehäuse
- 4: Absperrkegel
- 6: O-Ring
- 8: weiterer O-Ring
- 10: Ventilsitz
- 12: Einlasskanal
- 14: Einlassöffnung
- 16: Handrad
- 18: Bohrung
- 20: Kanal
- 22: Ringraum
- 24: zylindrischer Mantel
- 26: Körper
- 28: vordere Anlagefläche
- 30: hintere Anlagefläche
- 32: Anschlusskragen
- 34: Rastnut
- 36: Aufschieberampe
- 38: Stutzen
- 40: Außengewinde
- 42: verbreiterter Bereich
- 44: Stutzenöffnung
- 46: stirnseitige Endfläche
- 48: Schutzkappe
- 50: Innengewinde
- 52: Sicherungslasche
- 54: Stutzenkanal
- 56: Kappenscheibe
- 58: Anlagefläche/Innenfläche
- 60: Drainagenut
- 62: profilierte Ringfläche
- 64: Drainageöffnung
- 66: Schlitz
- 68: Kragen
- 70: Segment
- 72: Gelenk
- 74: gerändelter Rand
- 76: Vorsprung
- 78: Steg

## Patentansprüche

1. Ventil für Rohrleitungen in einem Trinkwassersystem mit einem Gehäuse (2), in dem ein Ventilkörper beweglich vorgesehen ist, der in einer Geschlossenstellung gegen einen Ventilsitz (10) anlegbar ist, um einen Stutzen (38) des Ventils gegenüber einem durch das Gehäuse (2) gebildeten Einlass (12) abzusperren, und der in einer Offenstellung eine Kommunikation zwischen der Einlassöffnung (14) und dem Stutzen (38) erlaubt, wobei der Stutzen (38) an seinem freien Ende mit einem Gewinde (40) versehen ist, auf welches eine die Stutzenöffnung (44) des Stutzens (38) abdeckende Schutzkappe (48) des Ventils
montierbar ist, **dadurch gekennzeichnet,**
**dass** die Schutzkappe (48) und der Stutzen (38) so ausgebildet sind, dass die Stutzenöffnung (44) nicht mit der Schutzkappe (48) fluiddicht verschließbar ist.

2. Ventil nach Anspruch 1, **dadurch gekennzeichnet, dass** bei fest auf dem Stutzen (38) aufgeschraubter Schutzkappe (48) zumindest eine mit der Stutzenöffnung (44) kommunizierende Drainageöffnung (64) verbleibt.

3. Ventil nach Anspruch 1 oder 2, **dadurch gekennzeichnet, dass** die Schutzkappe (48) einen mit einem Gewinde (50) versehenen geschlitzten Kragen (68) umfasst.

4. Ventil nach einem der vorherigen Ansprüche, **dadurch gekennzeichnet, dass** die Schutzkappe (48) eine profilierte Ringfläche (62) aufweist, die gegen eine stimseitige Endfläche (46) des Stutzens (48) anlegbar ist.

5. Ventil nach einem der vorherigen Ansprüche, **dadurch gekennzeichnet, dass** die Schutzkappe (48) zwischen zwei benachbarten Schlitzen (66) ein Segment (70) ausformt, welches federnd an elne Kappenscheibe (56) der Schutzkappe (48) angebunden ist.

## Claims

1. Valve for pipelines in a drinking water system, comprising a housing (2) in which a valve body is movably arranged, which valve body can, in a closed position, be placed against a valve seat (10) in order to shut off a nozzle (38) of the valve from an inlet (12) formed by the housing (2), and which valve body allows, in an open position, communication between the inlet opening (14) and the nozzle (38), the nozzle (38) being provided with a thread (40) on the free end thereof, onto which thread a protective cap (48) of the valve that covers the nozzle opening (44) of the nozzle (38) can be fitted,
**characterised in that**
the protective cap (48) and the nozzle (38) are designed such that the nozzle opening (44) cannot be sealed in a fluid-tight manner by means of the protective cap (48).

2. Valve according to claim 1, **characterised in that** when the protective cap (48) is securely screwed onto the nozzle (38), at least one drainage opening (64) that communicates with the nozzle opening (44) remains.

3. Valve according to either claim 1 or claim 2, **characterised in that** the protective cap (48) comprises a slotted collar (68) provided with a thread (50).

4. Valve according to any of the preceding claims, **characterised in that** the protective cap (48) comprises a profiled annular surface (62), which can be placed against a front end surface (46) of the nozzle (48).

5. Valve according to any of the preceding claims, **characterised in that** the protective cap (48) forms a segment (70) between two adjacent slots (66) that is resiliently connected to a cap disc (56) of the protective cap (48).

## Revendications

1. Vanne pour conduites tubulaires dans un système d'eau potable, comprenant un corps de vanne (2) dans lequel est prévu de manière mobile, un corps d'obturation de vanne, qui, dans une position fermée, peut être appliqué contre un siège de vanne (10), en vue d'obturer un embout de tubulure (38) de la vanne par rapport à une entrée d'alimentation (12) formée par le corps de vanne (2), et qui, dans une position ouverte, permet une communication entre l'ouverture d'entrée d'alimentation (14) et l'embout de tubulure (38), l'embout de tubulure (38) étant pourvu à son extrémité libre, d'un filetage (40) sur lequel peut être monté un capuchon de protection (48) de la vanne, qui recouvre l'ouverture d'embout (44) de l'embout de tubulure (38),
**caractérisée en ce que** le capuchon de protection (48) et l'embout de tubulure (38) sont conçus de façon telle, que l'ouverture d'embout (44) ne puisse pas être fermée de manière hermétique aux fluides par le capuchon de protection (48).

2. Vanne selon la revendication 1, **caractérisée en ce que** lorsque le capuchon de protection (48) est vissé à fond sur l'embout de tubulure (38), au moins une ouverture de drainage (64) communiquant avec l'ouverture d'embout (44) demeure libre.

3. Vanne selon la revendication 1 ou la revendication 2, **caractérisée en ce que** le capuchon de protection (48) comporte une collerette (68) fendue, pourvue d'un filetage (50).

4. Vanne selon l'une des revendications précédentes, **caractérisée en ce que** le capuchon de protection (48) présente une surface annulaire (62) profilée, qui peut venir s'appuyer contre une surface terminale frontale (46) de l'embout de tubulure (38).

5. Vanne selon l'une des revendications précédentes, **caractérisée en ce que** le capuchon de protection (48) forme entre deux fentes (66) voisines, un segment (70) qui est rattaché de manière élastique à un disque de capuchon (56) du capuchon de protection (48) .
